(19) Europäisches Patentamt
European Patent Office
Office européen des brevets

(11) EP 3 601 425 B1

(12) **EUROPEAN PATENT SPECIFICATION**

(45) Date of publication and mention of the grant of the patent:
**10.03.2021 Bulletin 2021/10**

(21) Application number: **18721164.4**

(22) Date of filing: **28.03.2018**

(51) Int Cl.:
***C08L 55/02*** *(2006.01)* ***C08K 5/00*** *(2006.01)*
***C08L 51/04*** *(2006.01)*

(86) International application number:
**PCT/IL2018/050357**

(87) International publication number:
**WO 2018/178983 (04.10.2018 Gazette 2018/40)**

(54) **FLAME-RETARDED STYRENE-CONTAINING COMPOSITIONS**
FLAMMHEMMENDE ZUSAMMENSETZUNGEN AUF STYROLBASIS
COMPOSITIONS IGNIFUGÉES À BASE DE STYRÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2017 US 201762478608 P**

(43) Date of publication of application:
**05.02.2020 Bulletin 2020/06**

(73) Proprietor: **Bromine Compounds Ltd.**
**8410101 Beer-Sheva (IL)**

(72) Inventors:
- **HIRSCHSOHN, Yaniv**
**7666604 Rehovot (IL)**
- **EDEN, Eyal**
**6082633 Shoham (IL)**

(74) Representative: **Potter Clarkson**
**The Belgrave Centre**
**Talbot Street**
**Nottingham NG1 5GG (GB)**

(56) References cited:
**WO-A1-2015/170130** **DE-T5-112006 001 824**
**US-A1- 2015 126 650**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 601 425 B1

## Description

Many polymers in commercial use contain flame retardants to reduce their flammability. The flammability characteristics of plastic materials are usually quantifiable according to a method specified by Underwriter Laboratories standard UL 94, where an open flame is applied to the lowermost edge of a vertically mounted test specimen made of the tested polymer formulation. The specimens used in the UL 94 test method vary in thickness (typical thicknesses are ~3.2 mm, ~1.6 mm, ~0.8 mm and ~0.4mm). During the test, various features of the flammability of the test specimens are recorded. Then, according to the classification requirements, the polymer formulation is assigned with either V-0, V-1 or V-2 rating at the measured thickness of the test specimen. Polymer formulation assigned with the V-0 rating is the less flammable. Furthermore, in the UL-94 burning test, the thinner the specimens are, the longer the burning time.

The additives of choice for impact modified styrenic polymers, such as high impact polystyrene (HIPS) and acrylonitrile-butadiene-styrene (ABS), are bromine-containing compounds, owing to their ability to achieve at a reasonable concentration an acceptable level of flame retardancy and retain the mechanical properties of the polymer. But to reach the goal, bromine-containing compounds need antimony as synergist. That is, bromine-containing flame retardants are added to plastic polymers together with antimony trioxide ($Sb_2O_3$), which functions synergistically to enhance the activity of the flame retardant, usually at about 2:1-5:1 weight ratio (calculated as the ratio between the concentrations of bromine and $Sb_2O_3$ in the polymer composition). For example, in US 5,387,636 it is stated that antimony trioxide is used in HIPS at a concentration ranging from 2 to 6 wt%. Finberg et al. [Polymer Degradation and Stability 64, p. 465-470 (1999)] reported flame retarded ABS meeting UL-94 V-0/1.6 mm, with bromine and antimony trioxide concentrations ranging from 11 to 15% and 6 to 8% by weight, respectively, indicating a fairly high loading level of antimony trioxide.

The dependence of some commercial flame retardants on antimony trioxide in HIPS and ABS was investigated in co-assigned WO 2010/010561. Antimony trioxide was applied in a small amount, that is, $[Sb_2O_3] \leq 2.0$ wt%, and the concentration of the flame retardant was adjusted to provide an amount of bromine from 10 to 18 wt%. The amount of bromine in the polymer composition is calculated by multiplying the bromine content of the flame retardant under consideration by the weight concentration of that flame retardant in the polymer formulation. The amount of bromine supplied by a given flame retardant is hereinafter designated $Br_{\text{Fr name}}$. A sharp increase in the amount of bromine needed to meet UL 94 V-1 or V-0 ratings was generally observed when the concentration of antimony trioxide was reduced to less than 2 wt% (from 2 wt% → 1.5 wt% → 1.0 wt% → 0.5 wt%). Among the bromine-containing additives tested in WO 2010/010561, Tris(2,4,6-tribromophenoxy)-s-triazine (also known as FR-245) showed a fairly modest dependence on antimony trioxide compared to other flame retardants. But even FR-245 (added to supply $Br_{\text{FR-245}}$=12 wt%) needed the help of 1.5 wt% antimony trioxide in order to achieve UL 94 V-0 rating for ABS (ABS is more difficult to flame retard than HIPS; see Example 32 of WO 2010/010561). Furthermore, as shown by Example 3 below, to compensate for complete removal of antimony trioxide from ABS, FR-245 must be applied at a concentration as high as ~33.0% wt (equivalent to $Br_{\text{FP-245}}$=22%). Another study reported in WO 2013/176868 also shows that ABS meeting UL-94 V-0/1.6 mm rating with $10\% \leq Br_{\text{FR-245}} \leq 15\%$ is achievable only upon antimony addition.

To summarize, many commercial ABS formulations available in the market are flame retarded with the aid of 10 to 15 wt% bromine incorporated in the formulation. The conventional wisdom in the art is that antimony must be present in these formulations to enable them to achieve UL-94 V-1/1.6 mm or UL-94 V-0/1.6 mm ratings at acceptable total loading levels of additives.

Non-halogen flame retardants are also used commercially in plastic formulations. For example, the class of dialkyl phosphinic acid salts of the formula $M_1^{n+}$ $(R^1R^2PO_2)_n$ where $R^1$ and $R^2$ are independently selected from the group consisting of C1-C5 linear and branched alkyl and $M_1$ designates a metal cation with valence n [in particular metal salts of diethyl phosphinic acid ($R^1$=$R^2$=$C_2H_5$), especially the aluminum salt] were found to be useful as flame retardants. Aluminum diethyl-phosphinate - hereinafter identified by its chemical formula $Al((C_2H_5)_2PO_2)_3$ - is commercially available (Exolit® OP 1230/1240/930 from Clariant).

In US 2005/000427 it was shown that $Al((C_2H_5)_2PO_2)_3$ is fairly efficient as a sole flame retardant in polyamide 6,6 and glass-fiber reinforced PBT, enabling the compositions to reach UL 94 V-2/0.8 at a loading level of only 10% by weight (Examples 10 and 15). It is also shown in US 2005/000427 that when $Al((C_2H_5)_2PO_2)_3$ was combined with brominated polystyrene or poly(pentabromobenzyl acrylate) in polyamide 6,6 and glass-fiber reinforced PBT, then UL-94 V-0/0.8 mm rated compositions were obtained (see US 2005/000427, Examples 8 and 18, respectively).

According to the present invention there is provided a composition according to claim 1 and a molded article according to claim 15.

Experimental work conducted in support of this invention shows that Al $((C_2H_5)_2PO_2))_3$ does not enable ABS composition to gain UL 94 rating even at a loading level as high as 24% by weight. However, we have found that ABS can be successfully flame retarded with the aid of a binary mixture consisting of (i) bromine-containing compound, for example, tris(2,4,6-tribromophenoxy)-s-triazine or end-capped brominated epoxy oligomer and (ii) Al $((C_2H_5)_2PO_2))_3$, when the bromine-containing compound is the major component and Al $((C_2H_5)_2PO_2))_3$ is the minor component of the mixture, achieving UL-94 V-0/1.6 mm rated ABS, even in the absence of antimony trioxide. For example, illustrative

antimony-free ABS composition containing 12% by weight bromine and 6% by weight Al $((C_2H_5)_2PO_2))_3$ was found to meet the requirements of UL-94 V-0/1.6 mm classification (with the aid of a dripping agent).

Moreover, replacement of a portion of Al $((C_2H_5)_2PO_2))_3$ with a metal hypophosphite salt enables good flame retardancy to be reached in conjunction with improved impact strength (measured by the IZOD test). Metal salts of hypophosphorous acid, that is, metal hypophosphite salts of the general formula $M_2{}^{q+}(H_2PO_2)_q$ where $M_2$ is a metal cation with a valence q [e.g., aluminum hypophosphite, $Al(H_2PO_2)_3$ and calcium hypophosphite, $Ca(H_2PO_2)_2$] have been previously applied to reduce the flammability of ABS, as reported in Ind. Eng. Chem. Res., 2014, 53 (6), pp 2299-2307 and WO 2015/170130 in the name of Italmatch Chemical SpA. In the latter publication it was shown that as a sole flame retardant additive in ABS, Al $(H_2PO_2)_3$ is effective at a very high concentration of 35% to achieve UL 94 V-0/3.2 mm rating. But even this unacceptably high loading level is insufficient to meet UL 94 rating requirements for thinner test specimens (1.6 mm thick specimen). As to calcium hypophosphite, it is mentioned in US 6,503,969 (in the name of BASF) and WO 2012/113146 (in the name of Rhodia).

The experimental results reported below indicate that complete removal of antimony from ABS flame retarded with bromine-containing compound is compensated by the presence of a fairly small amount of dialkyl phosphinic acid salt, or by the presence of a mixture consisting of dialkyl phosphinic acid salt and metal hypophosphite salt, to achieve UL-94 V-1/1.6 mm or UL-94 V-0/1.6 mm ratings. The added salts are applied in a total amount significantly lower than one would expect to be effective on the basis of the poor efficacy of these additives in ABS.

The dialkyl phosphinic acid salt, e.g., $Al((C_2H_5)_2PO_2)_3$, works especially well together with bromine-containing compound which is melt-blendable in ABS (i.e., melts at the processing temperature of ABS), having bromine atoms which are all aromatically-bound, with bromine content of the flame retardant preferably being in the range from 50 to 70% by weight. For example, the following brominated flame retardants are suitable for use according to the invention:

(i) Tris(2,4,6-tribromophenoxy)-s-triazine, with aromatically-bound bromine atoms, having bromine content of 67% by weight, represented by the Formula I:

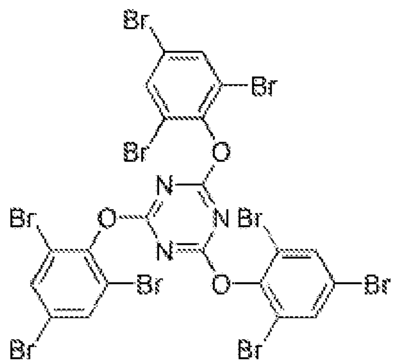

(Formula I)

The preparation of tris(2,4,6-tribromophenoxy)-s-triazine is generally based on the reaction of cyanuric chloride with 2,4,6-tribromophenolate under various conditions well known in the art (see, for example, US 5,907,040, 5,965,731 and 6,075,142). The flame retardant is also commercially available from ICL-IP under the name FR-245. The chemical name and FR-245 are interchangeably used herein.

ii) brominated epoxy resins and end-capped derivatives thereof, with aromatically-bound bromine atoms, having bromine content of 50 to 60% by weight, represented by the Formula (II):

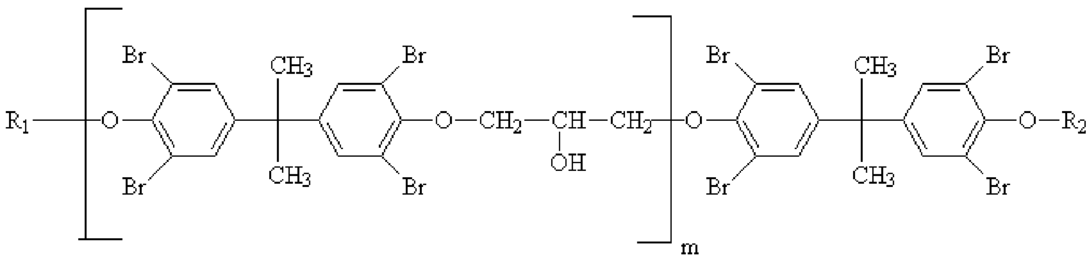

(Formula II)

wherein m indicates degree of polymerization, $R_1$ and $R_2$ are independently selected from the group consisting of the following:

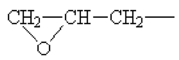

and

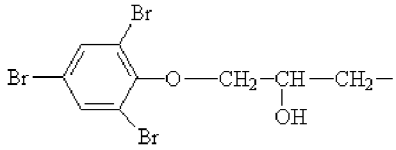

Preferred are tribromophenol end-capped low-molecular weight resins represented by the following Formula (IIa) and mixtures thereof:

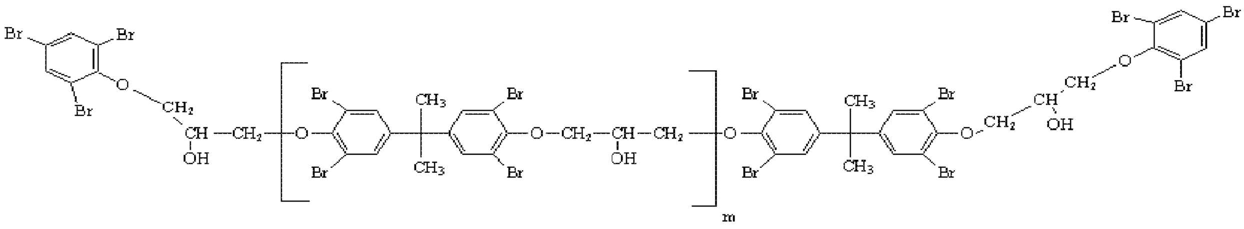

wherein m is an integer in the range between 0 and 5, and more preferably in the range between 0 and 4. That is, bis (2,4,6-tribromophenyl ether)-terminated tetrabromobisphenol A-epichlorohydrin resin, which is in the form of a mixture comprising the individual tribromophenol end-capped compounds of Formula IIa wherein m equals 0, 1 and 2, and possibly higher order oligomers of bis(2,4,6-tribromophenyl ether)-terminated tetrabromobisphenol A-epichlorohydrin resin. Flame retardants of Formula IIa with number-average molecular weight from 1300 to 2500, more preferably from about 1400 to 2500, for example, from 1800 to 2100, are commercially available (e.g., F-3020, manufactured by ICL-IP), with molecular weight of about 2000, bromine content of 56%.

As mentioned above, addition of metal hypophosphite salt to replace a portion of dialkyl phosphinic acid metal salt keeps good flame retardancy and increases impact properties. Preferred metal hypophosphite salts are aluminum hypophosphite and calcium hypophosphite. $Al(H_2PO_2)_3$ is available on the market from various manufacturers; it can be made by reacting an aluminum salt with hypophosphorous acid (e.g., with slow heating at 80-90°C (see Handbook of inorganic compounds, second addition by D. L. Perry; see also US 7,700,680 and J. Chem. Soc. P. 2945 (1952)). $Ca(H_2PO_2)_3$ is also commercially available. The salt can be prepared by the reaction of calcium hydroxide on yellow phosphorous, as shown in WO 2015/170130, or by the reaction of calcium carbonate or oxide with $H_3PO_2$, followed by evaporation of the solvent and recovery of the salt (see Encyclopedia of the Alkaline Earth Compounds by R. C. Ropp; 2013 Elsevier). Other methods are found in US 2,938,770, based on treatment with an ion exchange resin. Production of calcium hypophosphite is also described in CN 101332982.

The invention is therefore primarily directed to a substantially antimony-free composition meeting UL-94 V-1/1.6 mm or UL-94 V-0/1.6 mm test requirements, comprising:

an impact modified styrene-containing polymer, preferably ABS;
at least one bromine-containing flame retardant, preferably Tris(2,4,6-tribromophenoxy)-s-triazine;
at least one dialkyl phosphinic acid metal salt $M_1^{n+}(R^1R^2PO_2)_n$, preferably in combination with one or more metal hypophosphite salts $M_2^{q+}\,(H_2PO_2)_q$; and
at least one anti-dripping agent,
wherein the total concentration of the bromine-containing flame retardant, the dialkyl phosphinic acid metal salt and the optional metal hypophosphite is less than 28% by weight, e.g., from 18 to 26% by weight, more specifically from 19 to 25% by weight (e.g., 20 to 25%), especially from 20 to 24% by weight (based on the sum of all components in the composition; hence hereinafter, unless otherwise indicated, concentrations are based on the total weight of the composition).

The composition of the invention is substantially antimony-free. By "substantially antimony-free" is meant that the concentration of antimony (e.g., antimony trioxide) in the composition is well below the acceptable amount used in plastics in conjunction with halogenated additives in styrenic formulations, e.g., not more than 0.3% by weight, more preferably, up to 0.2% by weight, e.g., 0.0-0.1% by weight (based on the total weight of the composition). Most preferably, the compositions of the invention are totally devoid of antimony.

Specific impact modified styrenic polymers (including copolymers/terpolymers) are ABS, HIPS and ASA. ABS refers to copolymers/terpolymers that include the structural units corresponding to (optionally substituted) styrene, acrylonitrile and butadiene, regardless of the composition and method of production of said polymers. Characteristics and

compositions of ABS are described, for example, in Encyclopedia of Polymer Science and Engineering, Volume 16, pages 72 - 74 (1985). ABS compositions of the invention contain not less than 50% by weight ABS, e.g., not less than 60% by weight, more specifically between 65 and 80 by weight ABS, with MFI between 1 and 50 g/10 min (measured according to ISO 1133 at 220°C/10 kg). HIPS indicates the group of rubber-modified copolymers of styrenic monomers, obtainable, for example, by mixing an elastomer (butadiene) with the (optionally substituted) styrenic monomer(s) prior to polymerization. Characteristics and compositions of HIPS are described, for example, in "Encyclopedia of Polymer Science and Engineering", Volume 16, pages 88 - 96 (1985). The HIPS compositions provided by the invention generally comprise not less than 50% by weight HIPS, e.g., not less than 60% by weight, more specifically between 65 and 80 by weight HIPS having a MFI between 1 and 50 (ISO 1133; $200^0$C/5kg). ASA is an abbreviation of acrylonitrile styrene acrylate and is sometimes used as a replacement for ABS (incorporating acrylate rubber instead of butadiene rubber).

In preferred ABS compositions of the invention, the total concentration of:

(i) bromine-containing flame retardant and (ii) $M_1^{n+}$ $(R^1R^2PO_2)_n$; or
(i) bromine-containing flame retardant, (ii) $M_1^{n+}(R^1R^2PO_2)_n$ and
(iii) $M_2^{q+}(H_2PO_2)_q$

is preferably from 20 to 25% (20 to 24%) by weight based on the total weight of the composition.

Regarding the concentrations of the individual components (i), (ii) and (iii), it should be noted that the concentration of bromine in the composition of the invention is from 9.5 to 15.5% by weight, e.g., 10-15%. As explained above, the concentration of bromine in the composition is calculated by multiplying the bromine content of a given flame retardant (designated herein $Br_{\text{Fr name}}$ and expressed as % by weight) by the weight concentration of that flame retardant in the composition. For example, the bromine contents of commercially available FR-245 and F-3020 are $Br_{\text{FR-245}}$ = 67% and $Br_{\text{F-3020}}$ = 56%, respectively. Therefore, to incorporate for example 12% by weight bromine into the ABS composition, the corresponding concentrations of these two flame retardants should be 17.9% and 21.4% (by weight relative to the total weight of the composition).

When $M_1^{n+}(R^1R^2PO_2)_n$ {e.g., $Al((C_2H_5)_2PO_2)_3$} is used in the absence of $M_2^{q+}(H_2PO_2)_q$, then it is preferably added at a concentration from 3 to 9%, more preferably from 4 to 8%, even more preferably from 4.5 to 7.5% and especially from 5.5 to 6.5% by weight relative to the total weight of the ABS composition.

In the preferred embodiment of the invention, when both $M_1^{n+}(R^1R^2PO_2)_n$ and $M_2^{q+}(H_2PO_2)_q$ are used together {e.g., $Al((C_2H_5)_2PO_2)_3$ in combination of with either $Al(H_2PO_2)_3$ or $Ca(H_2PO_2)_2$}, then the sum of their concentrations is preferably from 3 to 9%, more preferably from 4 to 8%, even more preferably from 4.5 to 7.5% and especially from 5.5 to 6.5% by weight relative to the total weight of the ABS composition. Equally proportioned combinations are preferred, that is, the concentration of $Al((C_2H_5)_2PO_2)_3$ is roughly equal to the concentration of $Al(H_2PO_2)_3$ or $Ca(H_2PO_2)_2$. Hereinafter square brackets are used to indicate concentration of a compound. For example, the ratio $[M_1^{n+}(R^{11}R^2PO_2)_n]$ : $[M_2^{q+}(H_2PO_2)_q]$ is in the range from 2:1 to 1:2, e.g., from 1.5:1 to 1:1.5, preferably about 1:1.

In the compositions of the invention, the weight ratio [bromine] : $[Al((C_2H_5)_2PO_2)_3]$, the weight ratio [bromine] : $\{[Al((C_2H_5)_2PO_2)_3] + [Al(H_2PO_2)_3]\}$ or the weight ratio [bromine] : $\{[Al((C_2H_5)_2PO_2)_3] + [Ca(H_2PO_2)_2]\}$ is from 2.5:1 to 1.5:1, preferably from 2.25:1 to 1.5:1, more preferably from 2.1:1 to 1.6:1.

The compositions according to the present invention also include one or more anti-dripping agents such as polytetrafluoroethylene (abbreviated PTFE) in a preferred amount between 0.05 and 1.0 wt%, more preferably between 0.1 and 0.5 wt% and even more preferably from 0.1 to 0.3 wt%, based on the total weight of the composition. PTFE is described, for example, in US 6,503,988. Fibril-forming PTFE grades showing high melt-dripping preventing ability are preferred (e.g., Teflon® 6C (registered trademark of Dupont) and Hostaflon® 2071 (registered trademark of Dyneon).

For example, the following compositions were found to possess the desired flammability properties, that is, fulfilling the requirements for UL 94 V-1/1.6 mm or UL 94 V-0/1.6 mm rating:

from 70 to 80 % by weight of ABS (e.g., 73 to 77 %), from 15 to 20 % by weight of FR-245 (e.g., 16 to 19%), from 3 to 9% by weight of either $Al((C_2H_5)_2PO_2)_3$ or a mixture consisting of $Al((C_2H_5)_2PO_2)_3$ and at least one of $Al(H_2PO_2)_3$ and $Ca(H_2PO_2)_2$ (e.g., from 4 to 8%), and from 0.1 to 0.5% by weight of PTFE (e.g., from 0.15 to 0.35%);

from 70 to 80 % by weight of ABS (e.g., 71 to 75 %), from 18 to 23 % by weight of tribromophenol end-capped low-molecular weight epoxy resin of Formula IIa (e.g., 19 to 22%), from 3 to 9% by weight of either $Al((C_2H_5)_2PO_2)_3$ or a mixture consisting of $Al((C_2H_5)_2PO_2)_3$ and at least one of $Al(H_2PO_2)_3$ and $Ca(H_2PO_2)_2$ (e.g., from 4 to 8%) and from 0.1 to 0.5% by weight of PTFE (e.g., from 0.15 to 0.35%).

Some particularly preferred ABS compositions of this invention have bromine loading level below 13% by weight, that is, 9.5% ≤ [bromine] < 11.5% or 11.5% ≤ [bromine] ≤ 13.0%, in conjunction with either:

$$4.5 \leq \{[Al((C_2H_5)_2PO_2)_3] + [Al(H_2PO_2)_3]\} \leq 7.5;$$

or

$$4.5 \leq \{[Al((C_2H_5)_2PO_2)_3] + [Ca(H_2PO_2)_2]\} \leq 7.5$$

In these preferred compositions, the concentration of the ABS is above 75%, e.g., above 76% and even above 77% by weight of the total formulation, displaying increased impact strength.

Apart from ABS (or HIPS), the bromine-containing flame retardant, dialkyl phosphinic acid metal salt, metal hypophosphite and the anti-dripping agent, the composition of this invention may further contain conventional additives, such as UV stabilizers (e.g., benzotriazole derivative), processing aids, antioxidants (e.g., hindered phenol type), lubricants, pigments, heat stabilizers, dies and the like. The total concentration of these conventional additives is typically not more than 3 % by weight. In particular, the compositions of the invention may contain antioxidant(s) and heat stabilizer(s), e.g., a blend of organo-phosphite and hindered phenolic antioxidants.

We have also found that the flammability and/or mechanical properties of substantially $Sb_2O_3$-free, bromine-containing, $\{M_1^{n+}(R^1R^2PO_2)_n$ and $M_2^{q+}(H_2PO_2)_q\}$-added compositions of the invention can be modified upon addition of auxiliary additives selected from the group consisting of halogen-free flame retardants (e.g., phosphorous-based) and charring agents.

For example, an aryl phosphate ester of hydroquinone (1,4-dihydroxybenzene) of Formula (III):

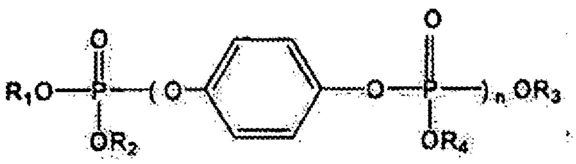

Formula (III)

wherein $R_1$, $R_2$, $R_3$ and $R_4$ each independently is aryl (e.g., phenyl) or alkyl-substituted aryl (e.g., xylenyl), optionally interrupted with heteroatoms, and n has an average value of from about 1.0 to about 2.0, may be used. The compounds of Formula (III) are described in EP 2089402. In general, the hydroquinone bis-phosphates of Formula III are prepared by reacting a diaryl halophosphate with hydroquinone in the presence of a catalyst. For example, diphenylchlorophosphate (DPCP) is reacted with hydroquinone in the presence of $MgCl_2$ to produce hydroquinone bis-(diphenyl phosphate). Detailed methods for synthesizing compounds of Formula (III) can be found in EP 2089402. The preferred compound of Formula (III) to be used in this invention [$R_1=R_2=R_3=R_4$=phenyl, $1.0<n<1.1$, that is, hydroquinone bis(diphenyl phosphate) with an n average value of about $1.0<n\leq1.05$] is the product of Example 1 of EP 2089402, hereinafter named "HDP" for the purpose of simplicity. This compound is obtainable in a solid form, and may be employed in the form of pastilles.

With the aid of aryl phosphate esters and/or one or more charring agents (for example, polydimethylsiloxane, e.g., high molecular weight siloxane with methacrylic functionality) it is possible to obtain good flammability performance in antimony-free, bromine-containing, $\{M_1^{n+}(R^1R^2PO_2)_n$ and $M_2^{q+}(H_2PO_2)_q\}$-added ABS. Accordingly, another embodiment of the invention relates to a substantially $Sb_2O_3$-free composition meeting UL-94 V-1/1.6 mm or UL-94 V-0/1.6 mm test requirements, comprising:

an impact modified styrene-containing polymer, preferably ABS;
at least one bromine-containing flame retardant, preferably Tris(2,4,6-tribromophenoxy)-s-triazine;
at least $M_1^{n+}(R^1R^2PO_2)_n$, preferably $Al((C_2H_5)_2PO_2)_3$, in combination with one or more metal hypophosphite salts $M_2^{q+}(H_2PO_2)_q$, preferably $Al(H_2PO_2)_3$ or $Ca(H_2PO_2)_2$;
at least one anti-dripping agent, preferably PTFE;
and at least one additive selected from the group consisting of aryl phosphate esters and charring agents;
wherein the total concentration of the bromine-containing flame retardant, $M_1^{n+}(R^1R^2PO_2)_n$, $M_2^{q+}(H_2PO_2)_q$, the aryl phosphate ester and the charring agent is less than 28% by weight, e.g., from 18 to 26% by weight, more specifically from 19 to 25% by weight (e.g., 20-25%), especially from 20 to 24% by weight (based on the sum of all components in the composition).

For example, the following compositions were found to possess the desired flammability properties, that is, fulfilling the requirements for UL 94 V-1/1.6 mm or UL 94 V-0/1.6 mm rating:

from 60 to 80 % by weight of ABS (e.g., 73 to 77 %); from 14 to 20 % by weight of FR-245 (e.g., 16 to 19%); from 4.5 to 7.5% by weight of a mixture of {$Al((C_2H_5)_2PO_2)_3$ + $Al(H_2PO_2)_3$} or a mixture of {$Al((C_2H_5)_2PO_2)_3$ + $Ca(H_2PO_2)_2$} (e.g., from 4 to 6%);
from 0.5 to 3% by weight of aryl phosphate ester (e.g., from 1 to 2 % hydroquinone bis(diphenyl phosphate of Formula III); and
from 0.1 to 0.5% by weight of PTFE (e.g., from 0.15 to 0.35%).
from 60 to 80 % by weight of ABS (e.g., 73 to 77 %); from 14 to 20 % by weight of FR-245 (e.g., 14 to 16); from 4.5 to 7.5% by weight of a mixture of {A1 $((C_2H_5)_2PO_2)_3$ + $Al(H_2PO_2)_3$} or a mixture of {Al $((C_2H_5)_2PO_2)_3$ + $Ca(H_2PO_2)_2$} (e.g., from 5 to 7%), from 1 to 6% by weight of charring agent (e.g., from 2 to 4 % PDMS); and from 0.1 to 0.5% by weight of PTFE (e.g., from 0.15 to 0.35%).

The preparation of the compositions of the invention may be carried out using different methods known in the art. For example, the ABS compositions are produced by melt-mixing the components, e.g., in a co-kneader or twin screw extruder, wherein the mixing temperature is in the range from 160 to 240°C. It is possible to feed all the ingredients to the extrusion throat together, but it is generally preferred to first dry-mix some or all of the components, and then to introduce the dry blend into the main feed port of the extruder. Process parameters such as barrel temperature, melt temperature and screw speed are described in more detail in the examples that follow.

The resultant extrudates are comminuted into pellets. The dried pellets are suitable for feed to an article shaping process, injection molding, extrusion molding, compression molding, optionally followed by another shaping method. Articles molded from the compositions of the invention form another aspect of the invention.

## Examples

### Materials and methods

Materials used for preparing the ABS or HIPS formulations are tabulated in Table 1 (FR is the abbreviation of flame retardant):

Table 1

| Component (manufacturer) | GENERAL DESCRIPTION | FUNCTION |
|---|---|---|
| ABS Magnum 3404 (Styron) | acrylonitrile-butadiene-styrene | Plastic matrix |
| HIPS Styron 1200 | High impact polystyrene | Plastic matrix |
| FR-245 (ICL-IP) | Tris(2,4,6-tribromophenoxy)-s-triazine bromine content: 67 wt% | Brominated FR |
| F-3020 (ICL-IP) | End-capped brominated epoxy resin MW=2000, Bromine content: 56 wt% | Brominated FR |
| Exolit OP 1240 (Clariant) | Aluminum diethyl phosphinate Al $((C_2H_5)_2PO_2)_3$ | FR |
| Ca $(H_2PO_2)_2$ (Sigma Aldrich) | Calcium hypophosphite | FR |
| Al $(H_2PO_2)_3$ (Hubei Sky Lake Chemical) | Aluminum hypophosphite | FR |
| HDP (Example 1 of EP 2089402; from ICL-IP) | phenyl phosphate ester of hydroquinone | FR |
| DC 4-7081 (Dow Corning) | PDMS | Charring agent, impact modifier |
| Hostaflon 2711 (Dyneon) | PTFE (Teflon) | Anti-dripping agent |
| Irganox® B-225 (Ciba) | Phenol:phosphite 3:1 based stabilizer | Antioxidant & heat stabilizer |

Preparation

Polymer and all additives were premixed and the blend was fed via Feeder no. 1 into the main port of a twin-screw corotating extruder ZE25 with L/D=32 (Berstorff). Operating parameters of the extruder were as follows:

Barrel temperature (from feed end to discharge end): 160°C, 180°C, 200°C, 200°C, 210°C, 220°C, 230°C, die - 240°C.

Screw rotation speed: 350 rpm

Feeding rate: 12 kg/hour.

The strands produced were pelletized in a pelletizer 750/3 from Accrapak Systems Ltd. The resultant pellets were dried in a circulating air oven (Heraeus Instruments) at 80°C for 3 hours. The dried pellets were injection molded into test specimens using Allrounder 500-150 from Arburg as follows:

Table 2

| PARAMETER | Set values |
|---|---|
| $T_1$ (Feeding zone) | 210°C |
| $T_2$ | 215°C |
| $T_3$ | $220^0$C |
| $T_4$ | $225^0$C |
| $T_5$ (nozzle) | $230^0$C |
| Mold temperature | $35^0$C |
| Injection pressure | 1300 bar |
| Holding pressure | 700 bar |
| Back pressure | 50 bar |
| Holding time | 11s |
| Cooling time | 9s |
| Mold closing force | 500kN |
| Filling volume (portion) | 30 ccm |
| Injection speed | 35 ccm/sec |

Specimens of 1.6 mm thicknesses were prepared. The test specimens were conditioned at 23°C for one week and then subjected to the several tests to determine their properties.

Flammability test

A direct flame test was carried out according to the Underwriters-Laboratories standard UL 94 in a gas methane operated flammability hood, applying the vertical burn on specimens of 1.6 mm thickness.

Mechanical test

The Notched Izod impact test was carried out according to ASTM D256-81 using Instron Ceast 9050 pendulum impact system.

**Examples 1 - 6 (all comparative)**

**ABS flame retarded with either bromine-containing compound, aluminum diethyl phosphinate or metal hypophosphite**

Bromine-containing flame retardants were applied to reduce the flammability of ABS without the aid of antimony trioxide. Likewise, aluminum diethyl phosphinate and metal hypophosphite salts were tested as sole flame retardants in ABS. The compositions and the results of the flammability test are tabulated in Table 3.

Table 3

| Example | Example 1 reference | Example 2 reference | Example 3 reference | Example 4 reference | Example 5 Reference WO 2015/170130 | Example 6 reference |
|---|---|---|---|---|---|---|
| **Composition** | | | | | | |
| ABS (wt%) | 75.7 | 71.6 | 66.8 | 75.6 | 64.3 | 75.6 |
| FR-245 (wt%) (bromine wt%, calculated) | 23.9 (16) | | 32.8 (22) | | | |
| F-3020 (bromine wt%, calculated) | | 28.0 (16) | | | | |
| Al $((C_2H_5)_2PO_2)_3$ (wt%) | | | | 24.0 | | |
| $Al(H_2PO_2)_3$ (wt%) | | | | | 35 | |
| $Ca(H_2PO_2)_2$ (wt%) | | | | | | 24.0 |
| PTFE (wt%) | 0.2 | 0.2 | 0.2 | 0.2 | 0.3 | 0.2 |
| Irganox B-225 (wt%) | 0.2 | 0.2 | 0.2 | 0.2 | --- | 0.2 |
| **Flammability test** | | | | | | |
| UL 94 1.6mm | NR | NR | V-0 | NR | NR | NR |

The results indicate that an amount of 16 wt% bromine in the composition, supplied by either FR-245 or F-3020, is insufficient when antimony trioxide is absent, seeing that UL-94 rating has not been achieved (Examples 1 and 2). To obtain UL-94 V-0/1.6 mm rating when FR-245 is used solely in ABS, it is necessary to increase the amount of bromine to about 22 wt%, namely, unacceptably high loading level of the flame retardant is needed (~33%; Example 3).

As to aluminum diethyl phosphinate and metal hypophosphite salts, they are clearly inefficient in ABS when used alone (Examples 4, 5 and 6). None of them is able to reduce the flammability of ABS to attain UL-94 rating even at loading levels of about ~25% by weight.

**Examples 7 - 11 (of the invention) Antimony-free ABS flame retarded with bromine-containing compound (12 wt% added bromine concentration) and $Al((C_2H_5)_2PO_2)_3$**

As shown in this set of examples, a combination of a bromine-containing flame retardant and aluminum diethyl phosphinate is able to achieve UL 94 V-0/1.6 mm rated ABS composition even in the absence of antimony trioxide. The amount of the brominated flame retardant incorporated into the composition was adjusted to supply 12% by weight bromine concentration in the composition - a customary bromine concentration in many commercial antimony-containing ABS formulations.

Table 4

| | Example 7 | Example 8 | Example 9 | Example 10 | Example 11 |
|---|---|---|---|---|---|
| **composition** | | | | | |
| ABS (wt%) | 75.7 | 72.2 | 75.7 | 75.7 | 75.7 |
| FR-245 (wt%) (bromine wt%, calculated) | 17.9 (12) | | 17.9 (12) | 17.9 (12) | 17.9 (12) |
| F-3020 (bromine wt%, calculated) | | 21.4 (12) | | | |
| $Al((C_2H_5)_2PO_2)_3$(wt%) | 6.0 | 6.0 | 3.0 | 3.0 | 2.5 |
| $Al(H_2PO_2)_3$ (wt%) | | | 3.0 | | |
| $Ca(H_2PO_2)_2$ (wt%) | | | | 3.0 | 2.5 |
| HDP (wt%) | | | | | 1.0 |
| PTFE (wt%) | 0.2 | 0.2 | 0.2 | 0.2 | 0.2 |
| Irganox B-225 (wt%) | 0.2 | 0.2 | 0.2 | 0.2 | 0.2 |
| **flammability test** | | | | | |
| UL 94 1.6mm rating | V-0 | V-0 | V-0 | V-0 | V-0 |
| **Mechanical test** | | | | | |
| Notched IZOD, J/m | 69.1 | ND | 76.18 | 88.52 | 94.55 |

It is seen that an addition of a fairly small amount of $Al((C_2H_5)_2PO_2)_3$ enables good flame retardancy to be reached despite the absence of antimony (Example 7 and 8). Furthermore, impact strength is increased on replacing a portion of $Al((C_2H_5)_2PO_2)_3$ with $Al(H_2PO_2)_3$ or Ca $(H_2PO_2)_2$ while keeping the total concentration of these additives within a reasonable (6% by weight) threshold (Example 9 and 10). The impact properties can be further improved with the aid of a very small amount of phenyl phosphate ester of hydroquinone, maintaining good flammability without exceeding the 6% by weight limit: $[Al((C_2H_5)_2PO_2)_3] + [Ca(H_2PO_2)_2] + [HDP] \leq 6\%$ (Example 11).

**Examples 12 - 14**

**Antimony-free ABS flame retarded with bromine-containing compound (10-11% added bromine concentration)** and **$Al((C_2H_5)_2PO_2)_3$**

ABS formulations that are UL-94 V-0/1.6 mm rated down to 10% bromine loading level are available in the market owing to the presence of the powerful synergist antimony trioxide at a concentration of about 4% by weight. In this set of examples, we investigated the ability of {$Al((C_2H_5)_2PO_2)_3$ + $Al(H_2PO_2)_3$} or {A1 $((C_2H_5)_2PO_2)_3$ + $Ca(H_2PO_2)_2$} combinations to help reaching good flammability in ABS when the loading level of bromine is less than 12% by weight and when the formulation is completely devoid of antimony trioxide.

The ABS formulations prepared and the results of the tests are tabulated in Table 5.

Table 5

| | Example 12 | Example 13 | Example 14 |
|---|---|---|---|
| **composition** | | | |
| ABS (wt%) | 77.2 | 78.7 | 75.7 |
| FR-245 (wt%) (bromine wt%, calculated) | 16.4 (11) | 14.9 (10) | 14.9 (10) |
| $Al((C_2H_5)_2PO_2)_3$ (wt%) | 3.0 | 3.0 | 3.0 |
| $Al(H_2PO_2)_3$ (wt%) | 3.0 | | 3.0 |
| $Ca(H_2PO_2)_2$ (wt%) | | 3.0 | |
| PDMS (wt%) | | | 3.0 |

(continued)

| | Example 12 | Example 13 | Example 14 |
|---|---|---|---|
| **composition** | | | |
| PTFE (wt%) | 0.2 | 0.2 | 0.2 |
| Irganox B-225 (wt%) | 0.2 | 0.2 | 0.2 |
| **Flammability test** | | | |
| UL 94 1.6mm rating | V-0 | V-1 | V-0 |
| **Mechanical test** | | | |
| Notched IZOD, J/m | 75.03 | 108.2 | 109.35 |

It is seen that {Al $((C_2H_5)_2PO_2)_3$ + $Al(H_2PO_2)_3$} and {$Al((C_2H_5)_2PO_2))_3$ + Ca $(H_2PO_2)_2$} mixtures meet the challenge successfully, compensating effectively for the complete removal on antimony from 10-11% loaded-bromine ABS formulations. These mixtures can be added at 6% by weight to enable antimony-free ABS formulations to attain at least UL-94 V-1/1.6 mm rating (Examples 12 and 13, respectively). With the addition of polydimethylsiloxane, UL-94 V-0/1.6 mm ABS formulation can be produced with enhanced impact strength (Example 14).

**Example 15**

**HIPS flame-retarded with a combination consisting of bromine-containing compound and $Al((C_2H_5)_2PO_2)_3$**

HIPS can also be flame retarded effectively with bromine-containing compound {Tris(2,4,6-tribromophenoxy)-s-triazine, FR-245)} in the absence of antimony trioxide but with added $Al((C_2H_5)_2PO_2)_3$.

Table 5

| | Example 15 |
|---|---|
| **composition** | |
| HIPS (wt%) | 75.7 |
| FR-245 (wt%) (bromine wt%, calculated) | 17.9 (12) |
| Al $((C_2H_5)_2PO_2)_3$ | 6.0 |
| PTFE (wt%) | 0.2 |
| Irganox B-225 (wt%) | 0.2 |
| **Flammability test** | |
| UL 94 1.6mm | V-1 |

## Claims

1. A composition comprising:

   an impact modified styrene-containing polymer;
   at least one bromine-containing flame retardant;
   at least one dialkyl phosphinic acid metal salt $M_1^{n+}(R^1R^2PO_2)_n$ wherein $M_1$ is a metal cation with valence $_n$ and $R^1$, $R^2$ are alkyl groups which may be the same or different;
   at least one anti-dripping agent,
   wherein the total concentration of the bromine-containing flame retardant and the dialkyl phosphinic acid metal salt is less than 28% by weight based on the sum of all components in the composition, wherein said composition is free of antimony and meets UL-94 V-1/1.6 mm or UL-94 V-0/1.6 mm test requirements.

2. A composition according to claim 1, wherein the impact modified styrene-containing polymer is selected from the

group consisting of acrylonitrile-butadiene-styrene (ABS) and high impact polystyrene (HIPS).

**3.** A composition according to any one of the preceding claims, wherein the total concentration of the bromine-containing flame retardant and the $M_1^{n+}$ $(R^1R^2PO_2)_n$ is from 18 to 26% by weight.

**4.** A composition according to any one of the preceding claims, wherein the bromine concentration of the composition is from 9.5 to 15.5% by weight based on the total weight of the composition.

**5.** A composition according to any one of the preceding claims, wherein the concentration of the dialkyl phosphinic acid metal salt $M_1^{n+}$ $(R^1R^2PO_2)_n$ is from 3 to 9% by weight based on the total weight of the composition.

**6.** A composition according to any one of the preceding claims, wherein $M_1^{n+}$ $(R^1R^2PO_2)_n$ is $Al((C_2H_5)_2PO_2)_3$, wherein the composition optionally further comprises one or more metal hypophosphite salts $M_2^{q+}$ $(H_2PO_2)_q$, wherein $M_2$ indicates a metal cation with valence q, wherein $M_1$ and $M_2$ may be the same or different.

**7.** A composition according to claim 6, wherein the sum of concentrations of $M_1^{n+}$ $(R^1R^2PO_2)_n$ and $M_2^{q+}(H_2PO_2)_q$ is from 3 to 9 % by weight based on the sum of all components in the composition.

**8.** A composition according to any one of the preceding claims, wherein the bromine-containing flame retardant has bromine content of 50% to 70% by weight and its bromine atoms are all aromatically-bound.

**9.** A composition according to claim 8, wherein the bromine-containing flame retardant is selected from the group consisting of:

(i) Tris(2,4,6-tribromophenoxy)-s-triazine represented by the following formula:

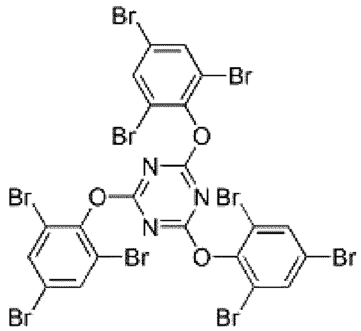

(Formula I);

and

ii) brominated epoxy resins and end-capped derivatives thereof, represented by the formula:

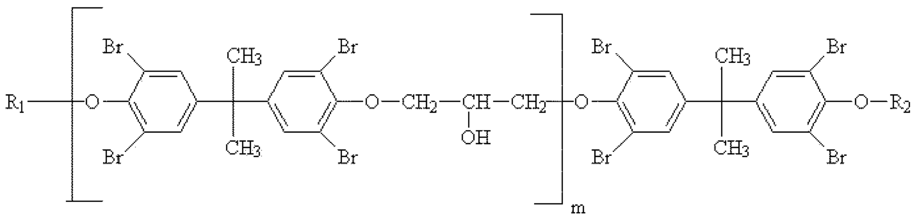

(Formula II)

wherein m indicates degree of polymerization, $R^1$ and $R_2$ are independently selected from the group consisting of:

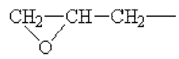

and

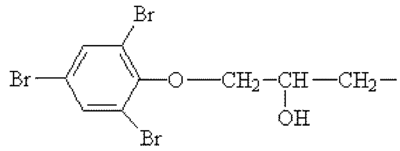

**10.** A composition according to claim 9, wherein the bromine-containing flame retardant is tris(2,4,6-tribromophenoxy)-s-triazine.

**11.** A composition according to claim 10, comprising from 70 to 80 % by weight of ABS, from 15 to 20 % by weight of tris(2,4,6-tribromophenoxy)-s-triazine, from 3 to 9% by weight of either $Al((C_2H_5)_2PO_2)_3$ or a mixture consisting of $Al((C_2H_5)_2PO_2)_3$ and at least one of $Al(H_2PO_2)_3$ and $Ca(H_2PO_2)_2$, and from 0.1 to 0.5% by weight of polytetrafluoroethylene, based on the total weight of the composition.

**12.** A composition according to claim 9, wherein the bromine-containing flame retardant is tribromophenol end-capped low-molecular weight resin represented by the following Formula (IIa) and mixtures thereof:

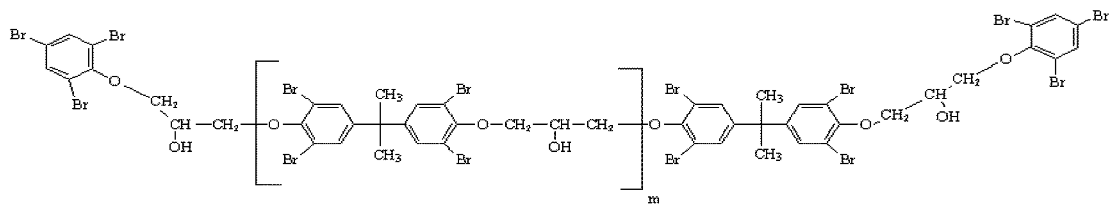

wherein m is an integer in the range between 0 and 5 with number-average molecular weight from 1300 to 2500.

**13.** A composition according to claim 12, comprising from 70 to 80 % by weight of ABS, from 18 to 23 % by weight of tribromophenol end-capped low-molecular weight epoxy resin of Formula IIa, from 3 to 9% by weight of either $Al((C_2H_5)_2PO_2)_3$ or a mixture consisting of $Al((C_2H_5)_2PO_2)_3$ and at least one of $Al(H_2PO_2)_3$ and $Ca(H_2PO_2)_2$ and from 0.1 to 0.5% by weight of polytetrafluoroethylene based on the total weight of the composition.

**14.** A composition according to any one of the preceding claims, which further comprises at least one additive selected from the group consisting of aryl phosphate esters and charring agents, wherein the total concentration of the bromine-containing flame retardant, the $M_1^{n+}$ $(R^1R^2PO_2)_n$, the $M_2^{q+}(H_2PO_2)_q$, the aryl phosphate ester and the charring agent is from 18 to 26% by weight based on the sum of all components in the composition.

**15.** A molded article comprising the composition of any one of the preceding claims.

**Patentansprüche**

**1.** Zusammensetzung, die Folgendes umfasst:

ein schlagzähmodifiziertes styrolhaltiges Polymer;
wenigstens ein bromhaltiges Flammschutzmittel;
wenigstens ein Dialkylphosphinsäuremetallsalz $M_1^{n+}(R^1R^2PO_2)_n$, wobei $M_1$ ein Metallkation mit einer Valenz n ist und $R^1$, $R^2$ Alkylgruppen sind, die gleich oder verschieden sein können;
wenigstens ein Antitropfmittel,
wobei die Gesamtkonzentration des bromhaltigen Flammschutzmittels und des Dialkylphosphinsäuremetallsalzes weniger als 28 Gew.-%, basierend auf der Summe aller Komponenten in der Zusammensetzung, beträgt, wobei die Zusammensetzung frei von Antimon ist und UL-94 V-1/1,6 mm- oder UL-94 V-0/1,6 mm-Testanforderungen erfüllt.

**2.** Zusammensetzung nach Anspruch 1, wobei das schlagzähmodifizierte styrolhaltige Polymer aus der Gruppe ausgewählt ist, die aus Acrylnitril-Butadien-Styrol (ABS) und hochschlagzähem Polystyrol (*high impact polystyrene* - HIPS) besteht.

**3.** Zusammensetzung nach einem der vorhergehenden Ansprüche, wobei die Gesamtkonzentration des bromhaltigen Flammschutzmittels und des $M_1^{n+}(R^1R^2PO_2)_n$ von 18 bis 26 Gew.-% beträgt.

**4.** Zusammensetzung nach einem der vorhergehenden Ansprüche, wobei die Bromkonzentration der Zusammensetzung von 9,5 bis 15,5 Gew.-%, basierend auf dem Gesamtgewicht der Zusammensetzung, beträgt.

**5.** Zusammensetzung nach einem der vorhergehenden Ansprüche, wobei die Konzentration des Dialkylphosphinsäuremetallsalzes $M_1^{n+}(R^1R^2PO_2)_n$ von 3 bis 9 Gew.-%, basierend auf dem Gesamtgewicht der Zusammensetzung, beträgt.

**6.** Zusammensetzung nach einem der vorhergehenden Ansprüche, wobei $M_1^{n+}(R^1R^2PO_2)_n$ $Al((C_2H_5)_2PO_2)_3$ ist, wobei die Zusammensetzung optional ferner ein oder mehrere Metallhypophosphitsalze $M_2^{q+}(H_2PO_2)_q$ umfasst, wobei $M_2$ ein Metallkation mit der Valenz q angibt, wobei $M_1$ und $M_2$ gleich oder verschieden sein können.

**7.** Zusammensetzung nach Anspruch 6, wobei die Summe der Konzentrationen von $M_1^{n+}(R^1R^1PO_2)_n$ und $M_2^{q+}(H_2PO_2)_q$ von 3 bis 9 Gew.-%, basierend auf der Summe aller Komponenten in der Zusammensetzung, beträgt.

**8.** Zusammensetzung nach einem der vorhergehenden Ansprüche, wobei das bromhaltige Flammschutzmittel einen Bromgehalt von 50 Gew.-% bis 70 Gew.-% aufweist und seine Bromatome alle aromatisch gebunden sind.

**9.** Zusammensetzung nach Anspruch 8, wobei das bromhaltige Flammschutzmittel aus der Gruppe ausgewählt ist, die aus Folgendem besteht:

(i) Tris(2,4,6-Tribromphenoxy)-s-triazin, das durch die folgende Formel dargestellt ist:

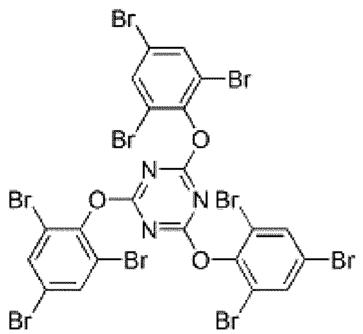

(Formel I);

and

ii) bromierte Epoxidharze und endverkappte Derivate davon, die durch die folgende Formel dargestellt sind:

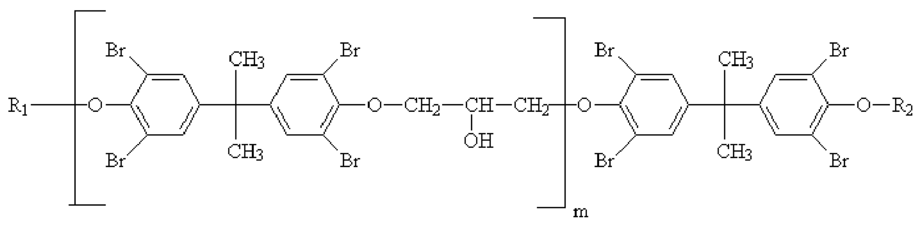

(Formel II)

wobei m den Polymerisationsgrad angibt, $R_1$ und $R_2$ unabhängig aus der Gruppe ausgewählt sind, die aus Folgendem besteht:

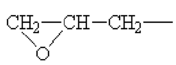

und

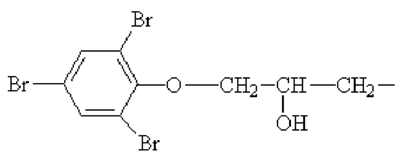

10. Zusammensetzung nach Anspruch 9, wobei das bromhaltige Flammschutzmittel Tris(2,4,6-Tribromphenoxy)-s-triazin ist.

11. Zusammensetzung nach Anspruch 10, die von 70 bis 80 Gew.-% ABS, von 15 bis 20 Gew.-% Tris(2,4,6-Tribromphenoxy)-s-triazin, von 3 bis 9 Gew.-% von entweder $Al((C_2H_5)_2PO_2)_3$ oder einer Mischung, die aus $Al((C_2H_5)_2PO_2)_3$ und $Al(H_2PO_2)_3$ und/oder $Ca(H_2PO_2)_2$ besteht, und von 0,1 bis 0,5 Gew.-% Polytetrafluorethylen, basierend auf dem Gesamtgewicht der Zusammensetzung, umfasst.

12. Zusammensetzung nach Anspruch 9, wobei das bromhaltige Flammschutzmittel Tribromphenol-endverkapptes Harz mit niedriger Molekularmasse, das durch die folgende Formel (IIa) dargestellt ist, und Mischungen davon ist:

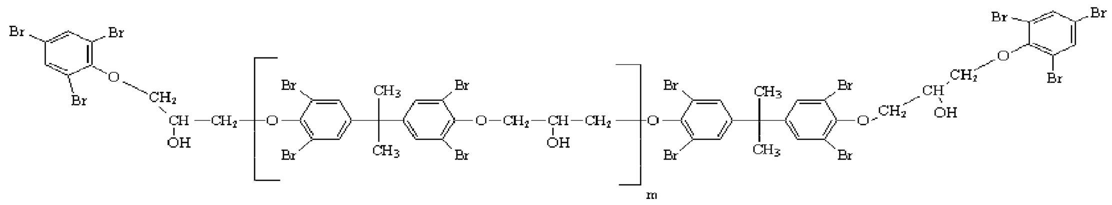

wobei m eine ganze Zahl in dem Bereich zwischen 0 und 5 mit einer zahlenmittleren Molekularmasse von 1300 bis 2500 ist.

13. Zusammensetzung nach Anspruch 12, die von 70 bis 80 Gew.-% ABS, von 18 bis 23 Gew.-% Tribromphenol-endverkapptes Epoxidharz mit niedriger Molekularmasse der Formel IIa, von 3 bis 9 Gew.-% von entweder $Al((C_2H_5)_2PO_2)_3$ oder einer Mischung, die aus $Al((C_2H_5)_2PO_2)_3$ und $Al(H_2PO_2)_3$ und/oder $Ca(H_2PO_2)_2$ besteht, und von 0,1 bis 0,5 Gew.-% Polytetrafluorethylen, basierend auf dem Gesamtgewicht der Zusammensetzung, umfasst.

14. Zusammensetzung nach einem der vorhergehenden Ansprüche, die ferner wenigstens ein Additiv umfasst, das aus der Gruppe ausgewählt ist, die aus Arylphosphatestern und Verkohlungsmitteln besteht, wobei die Gesamtkonzentration des bromhaltigen Flammschutzmittels, des $M_1^{n+}(R^1R^2PO_2)_n$, des $M_2^{q+}(H_2PO_2)_q$, des Arylphosphatesters und des Verkohlungsmittels von 18 bis 26 Gew.-%, basierend auf der Summe aller Komponenten in der Zusammensetzung, beträgt.

15. Formteil, das die Zusammensetzung nach einem der vorhergehenden Ansprüche umfasst.

## Revendications

1. Composition comprenant :

   un polymère contenant du styrène modifié par impact ;
   au moins un retardateur de flamme contenant du brome ;
   au moins un sel métallique de l'acide dialkyl phosphonique $M_1^{n+}(R^1R^2PO_2)_n$ dans lequel $M_1$ est un cation métallique ayant la valence n et $R^1$, $R^2$ étant des groupes alkyle qui peuvent être identiques ou différents ;
   au moins un agent antigoutte,
   dans laquelle la concentration totale du retardateur de flamme contenant du brome et du sel métallique de l'acide dialkyl phosphonique est inférieure à 28 % en poids par rapport à la somme de tous les composants dans la composition, ladite composition étant exempte d'antimoine et satisfaisant aux exigences d'essai de la norme UL-94 V-1/1,6 mm ou UL-94 V-0/1,6 mm.

2. Composition selon la revendication 1, dans laquelle le polymère contenant du styrène modifié par impact est choisi dans le groupe constitué par l'acrylonitrile-butadiène-styrène (ABS) et le polystyrène choc (HIPS).

3. Composition selon l'une quelconque des revendications précédentes, dans laquelle la concentration totale du retardateur de flamme contenant du brome et du $M_1^{n+}(R^1R^2PO_2)_n$ est de 18 à 26 % en poids.

4. Composition selon l'une quelconque des revendications précédentes, dans laquelle la concentration en brome de la composition est de 9,5 à 15,5 % en poids par rapport au poids total de la composition.

5. Composition selon l'une quelconque des revendications précédentes, dans laquelle la concentration en sel métallique de l'acide dialkyl phosphonique $M_1^{n+}(R^1R^2PO_2)_n$ est de 3 à 9 % en poids par rapport au poids total de la composition.

6. Composition selon l'une quelconque des revendications précédentes, dans laquelle $M_1^{n+}(R^1R^2PO_2)_n$ est $Al((C_2H_5)_2PO_2)_3$, dans laquelle la composition comprend éventuellement en outre un ou plusieurs sels d'hypophosphite métallique $M_2^{q+}(H_2PO_2)_q$, dans laquelle $M_2$ indique un cation métallique avec la valence q, dans laquelle $M_1$ et $M_2$ peuvent être identiques ou différents.

7. Composition selon la revendication 6, dans laquelle la somme des concentrations de $M_1^{n+}(R^1R^2PO_2)_n$ and $M_2^{q+}(H_2PO_2)_q$ est de 3 à 9 % en poids par rapport à la somme de tous les composants de la composition.

8. Composition selon l'une quelconque des revendications précédentes, dans laquelle le retardateur de flamme contenant du brome présente une teneur en brome de 50 % à 70 % en poids et ses atomes de brome sont tous liés aromatiquement.

9. Composition selon la revendication 8, dans laquelle le retardateur de flamme contenant du brome est choisi dans le groupe constitué par :

(i) de la tris(2,4,6-tribromophénoxy)-s-triazine représentée par la formule suivante :

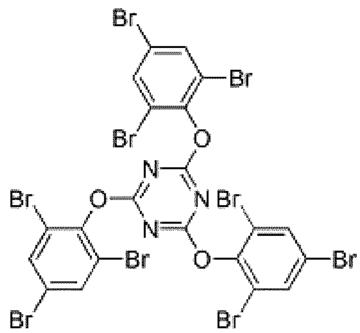

(Formule I) ;

et

ii) des résines époxy bromées et leurs dérivés coiffés à leurs extrémités, représentées par la formule :

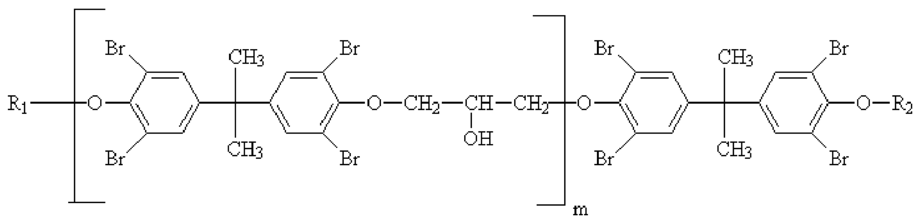

(Formule II)

dans laquelle m indique le degré de polymérisation, $R_1$ et $R_2$ sont indépendamment choisis dans le groupe constitué par :

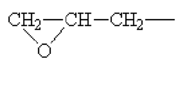

et

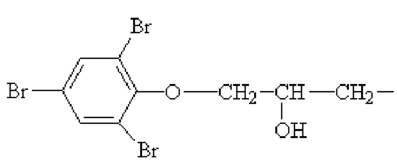

10. Composition selon la revendication 9, dans laquelle le retardateur de flamme contenant du brome est la tris(2,4,6-tribromophénoxy)-s-triazine.

**11.** Composition selon la revendication 10, comprenant de 70 à 80 % en poids d'ABS, de 15 à 20 % en poids de tris(2,4,6-tribromophénoxy)-s-triazine, de 3 à 9 % en poids soit d'$Al((C_2H_5)_2PO_2)_3$, soit d'un mélange constitué d'$Al((C_2H_5)_2PO_2)_3$ et d'au moins $Al(H_2PO_2)_3$ and $Ca(H_2PO_2)_2$, et de 0,1 à 0,5 % en poids de polytétrafluoroéthylène par rapport au poids total de la composition.

**12.** Composition selon la revendication 9, dans laquelle le retardateur de flamme contenant du brome est une résine de bas poids moléculaire coiffée aux extrémités de tribromophénol représentée par la formule (IIa) suivante et leurs mélanges :

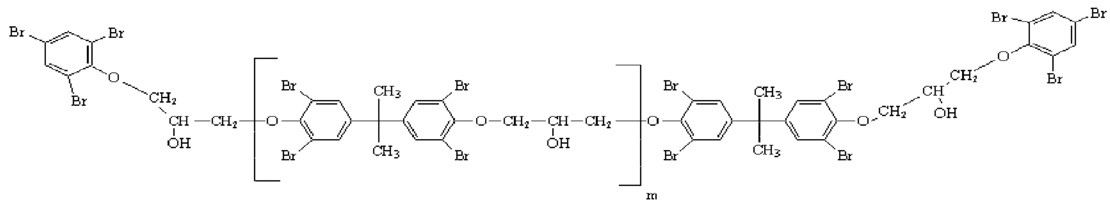

dans laquelle m est un nombre entier compris entre 0 et 5, avec un poids moléculaire moyen en nombre de 1 300 à 2 500.

**13.** Composition selon la revendication 12, comprenant de 70 à 80 % en poids d'ABS, de 18 à 23 % en poids de résine époxy de faible poids moléculaire coiffée aux extrémités de tribromophénol de formule IIa, de 3 à 9 % en poids soit d'$Al((C_2H_5)_2PO_2)_3$, soit un mélange constitué d'$Al((C_2H_5)_2PO_2)_3$, et $Al(H_2PO_2)_3$ et/ou $Ca(H_2PO_2)_2$, et de 0,1 à 0,5 % en poids de polytétrafluoroéthylène par rapport au poids total de la composition.

**14.** Composition selon l'une quelconque des revendications précédentes, qui comprend en outre au moins un additif choisi dans le groupe constitué par les esters de phosphate d'aryle et les agents de carbonisation, dans laquelle la concentration totale du retardateur de flamme contenant du brome, le $M_1^{n+}(R^1R^2PO_2)_n$, le $M_2^{q+}(H_2PO_2)_q$, l'ester de phosphate d'aryle et l'agent de carbonisation est de 18 à 26 % en poids par rapport à la somme de tous les composants dans la composition.

**15.** Article moulé comprenant la composition de l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5387636 A
- WO 2010010561 A
- WO 2013176868 A
- US 2005000427 A
- WO 2015170130 A
- US 6503969 B
- WO 2012113146 A
- US 5907040 A
- US 5965731 A
- US 6075142 A
- US 7700680 B
- US 2938770 A
- CN 101332982
- US 6503988 B
- EP 2089402 A


### Non-patent literature cited in the description


- **FINBERG et al.** *Polymer Degradation and Stability,* 1999, vol. 64, 465-470
- *Ind. Eng. Chem. Res.,* 2014, vol. 53 (6), 2299-2307
- *J. Chem. Soc. P.,* 1952, vol. 2945
- **R. C. ROPP.** Encyclopedia of the Alkaline Earth Compounds. Elsevier, 2013
- Encyclopedia of Polymer Science and Engineering. 1985, vol. 16, 72-74
- Encyclopedia of Polymer Science and Engineering. 1985, vol. 16, 88-96